# EUROPÄISCHE PATENTSCHRIFT

(11) **EP 1 268 664 B1**
(45) Veröffentlichungstag und Bekanntmachung des Hinweises auf die Patenterteilung: **13.04.2016**
(21) Anmeldenummer: 01907570.4
(22) Anmeldetag: 26.02.2001
(51) Int. Cl.: C08L 55/02, C08F 279/02, C08F 279/04, C08L 51/04

(54) **THERMOPLASTISCHE FORMMASSEN AUF BASIS SPEZIELLER PFROPFKAUTSCHUKKOMPONENTEN**
THERMOPLASTIC MOULDING MATERIALS BASED ON SPECIAL GRAFT RUBBER COMPONENTS
MATIERES MOULABLES THERMOPLASTIQUES A BASE DE COMPOSANTS SPECIAUX DE CAOUTCHOUC GREFFE

(30) Priorität: 09.03.2000 DE 10011544
(43) Veröffentlichungstag der Anmeldung: 02.01.2003
(73) Patentinhaber: Ineos ABS (Jersey) Limited, Channel Islands (GB)
(72) Erfinder: SUN, Liqing-Lee, Granville, OH 43023 (US); WENZ, Eckhard, 50679 Köln (DE); EICHENAUER, Herbert, 41539 Dormagen (DE); MOSS, Stefan, 42781 Haan (DE); ALBERTS, Heinrich, 51519 Odenthal (DE); HAUERTMANN, Hans-Bernhard, 41539 Dormagen (DE); ZABROCKI, Karl, 41564 Kaarst (DE); GASCHE, Hans-Erich, I-24121 Bergamo (IT); JANSEN, Ulrich, 41541 Dormagen (DE)
(74) Vertreter: Gille Hrabal
(86) Internationale Anmeldenummer: PCT/EP2001/002217
(87) Internationale Veröffentlichungsnummer: WO 2001/066641

(56) Entgegenhaltungen:
- EP-A- 0 540 470
- EP-A- 0 745 624
- WO-A-00/04067
- CH-A- 499 558
- DE-A- 2 101 650
- GB-A- 1 009 655
- US-A- 3 532 660
- US-A- 5 883 189

## Beschreibung

Gegenstand der Erfindung ist ein Verfahren zur Herstellung von thermoplastischen Formmassen vom ABS-Typ bzw. vom ABS-Blend-Typ, enthaltend verbesserte Pfropfkautschukkomponenten, die durch Emulsionspolymerisation unter Einhaltung definierter Reaktionsbedingungen erhalten werden.

Formmassen vom ABS-Typ sind Zweiphasenkunststoffe aus
I) einem thermoplastischen Copolymerisat insbesondere aus Styrol und Acrylnitril, in dem das Styrol ganz oder teilweise durch α-Methylstyrol oder Methylmethacrylat ersetzt werden kann; dieses Copolymerisat, auch als SAN-Harz oder Matrix-Harz bezeichnet, bildet die äußere Phase;
II) mindestens einem Pfropfpolymerisat, welches hergestellt worden ist durch Pfropfreaktion eines oder mehrerer der unter I genannten Monomeren auf Butadien - Homo - oder -Copolymerisat ("Pfropfgrundlage"). Dieses Pfropfpolymerisat ("Elastomerphase" oder "Pfropfkautschuk") bildet die disperse Phase im Matrixharz.

Zusätzlich können diese Kunststoffmischungen noch andere Polymerkomponenten wie z.B. aromatische Polycarbonatharze, Polyestercarbonatharze, Polyesterharze oder Polyamidharze enthalten, wodurch sogenannte ABS-Blend-Systeme erhalten werden.

Sowohl für ABS-Formmassen als auch für ABS-Blend-Systeme haben sich unter Verwendung von Redox-Initiatorsystemen hergestellte Pfropfkautschuke als Schlagzähmodifikatoren besonders bewährt (siehe z.B. EP-A 482 451 und dort zitierte Literatur), wobei in der Regel gute Zähigkeiten erzielt werden. Nachteilig ist, dass Oberflächenglanz, Reißdehnung und thermoplastische Fließfähigkeit oft nicht ausreichend sind bzw. starken Schwankungen unterliegen.

Außerdem neigen durch Redox-Initiierung hergestellte Pfropfkautschuke zu einem erhöhten Gehalt an nicht umgesetzten Monomeren, welcher zwar durch Zusatz von Metallionen (z.B. Fe-Ionen) im Reaktionsgemisch vermindert werden kann, dies jedoch zu Einbußen bei anderen Eigenschaften (z.B. Thermostabilität, Farbe des Polymeren) führt.

DE-A 2,101,650 beschreibt einen Kautschuklatex, erhalten durch Agglomeration eines Ausgangslatex. In Beispiel 2 wird ein Verfahren zur Herstellung eines mit Styrol und Acrylnitril gepfropften Polybutadienlatex durch Emulsionspolymerisation unter Verwendung eines Redox-Initiators (Fe(II)/Cumolhydroperoxid) beschrieben, wobei vor Beginn der Pfropfpolymerisationsreaktion der Kautschuklatex auf einen pH-Wert von 10 eingestellt wird. Es ist Beispiel 2 kein Hinweis zu entnehmen, dass bei Einhaltung von Reaktionsbedingungen gemäß des erfindungsgemäßen Gegenstandes Pfropfpolymerisate mit niedrigem Restmonomergehalt an Styrol resultieren und ausgezeichnete mechanische Eigenschaften, insbesondere Schlagzähigkeit und Reißdehnung aufweisen.

EP-A 540 470 beschreibt ein Verfahren zur Herstellung von Pfropfpolymerisaten durch Emulsionspolymerisation in Gegenwart von Eisen(II)Redox-Systemen als Katalysator und anschließender Koagulation des Pfropfpolymerlatex mit Erdalkaliverbindungen, wobei der pH der koagulierten "slurry" im Bereich von 8 bis 12 liegt. Aus Beispiel III und IV geht hervor, dass der pH-Wert von 7,2 durch Zugabe von KOH steigt und am Ende der Reaktion ein pH-Wert von 9,2 erreicht wird.

DE-A 37 30 205 beschreibt ein Verfahren zur Herstellung von Pfropfpolymerisaten auf Acrylatkautschuk-Basis, wobei ein Initiatorsystem aus organischem Hydroperoxid und Ascorbinsäure verwendet wird und der pH-Wert während der Pfropfpolymerisation kleiner 11 ist.

DE-A 198 31 735 beschreibt thermoplastische Formmassen vom ABS-Typ, die durch definierten Zulauf der Monomeren zum Kautschuklatex unter Verwendung von Persulfatverbindungen hergestellt werden. GB-A 1,009,655, WO 00/04067, CH 499558, US 5883189, und EP 0745624 offenbaren Zusammensetzungen, die durch Emulsionspolymerisation hergestelltes Pfropfpolymer enthalten.

In keiner der genannten Entgegenhaltungen wird beschrieben, dass die Herstellung u.a. unter Konstanthaltung des pH-Wertes (im Rahmen der üblichen Schwankungsbreite von ca. ± 0,5 Einheiten) erfolgt und dass Pfropfpolymerisate mit einem niedrigen Restmonomergehalt an Styrol resultieren.

Es besteht daher Bedarf an Pfropfkautschuken, die diese Nachteile nicht aufweisen sowie an einem Verfahren, nach dem sich ABS- und ABS-Blend-Formmassen ohne die genannten Nachteile herstellen lassen.

Es wurde nun gefunden, dass Formmassen mit sehr gutem Oberflächenglanz, hoher Reißdehnung und guter thermoplastischer Verarbeitbarkeit ohne negative Beeinflussung der übrigen Eigenschaften erhalten werden, wenn die Herstellung des eingesetzten Pfropfkautschuks unter Einhaltung genau definierter Reaktionsbedingungen erfolgt.

Gegenstand der Erfindung ist ein Verfahren zur Herstellung von Zusammensetzungen vom ABS-Typ bzw. vom ABS-Blend-Typ durch radikalische Emulsionspolymerisation von harzbildenden Vinylmonomeren unter Verwendung eines Redoxinitiatorsystems, in Gegenwart von in Latexform vorliegendem Kautschuk mit einer Glasübergangstemperatur ≤ 0°C, dadurch gekennzeichnet, dass die Herstellung des Pfropfpolymerisats A) derart erfolgt, dass vor Beginn der Pfropfpolymerisationsreaktion der Kautschuklatex auf einen pH-Wert von 9 bis 11, vorzugsweise von 9,5 bis 10,5 und besonders bevorzugt von 9,7 bis 10,3 eingestellt wird, die Redöxinitiatorkomponenten in Mengen von 0,1 bis 2,5 Gew.-%, vorzugsweise 0,2 bis 2,0 Gew.-% und besonders bevorzugt 0,5 bis 1,5 Gew.-% (jeweils bezogen auf zudosierte Monomere) eingesetzt werden und der pH-Wert während der gesamten Pfropfpolymerisationsreaktion einen Wert von 11,0, vorzugsweise 10,8 nicht überschreiten und einen Wert von 8,8, vorzugsweise 9,0 nicht unterschreiten darf, der pH-Wert während der gesamten Reaktion im Rahmen der üblichen Schwankungsbreite (ca. ± 0,5 Einheiten) konstant bleibt, und der Temperaturunterschied zwischen Beginn und Ende der Reaktion mindestens 10°C, vorzugsweise mindestens 15°C und besonders bevorzugt mindestens 20°C beträgt.

Mit Hilfe der erfindungsgemäßen Verfahren erhält man Pfropfpolymerisate mit einem Restmonomer-Gehalt an Styrol von kleiner 2500 ppm, vorzugsweise kleiner 2000 ppm, insbesondere kleiner 1600 ppm (bezogen auf das so erhaltene Pfropfpolymerisat). Aus den Beispielen ist ersichtlich, dass bei Abweichungen von dem gemäß der Verfahrensbesehreibung einzuhaltenden Reaktionsbedingungen Pfropfpolymerisate mit hohen Restmonomergehalten an Styrol entstehen.

Als Kautschuke zur Herstellung der erfindungsgemäßen elastisch-thermoplastischen Pfropfpolymerisate eignen sich im Prinzip alle in Emulsionsform vorliegenden kautschukartigen Polymerisate mit einer Glasübergangstemperatur unter 0°C.

Verwendet werden können z.B.
- Dienkautschuke, d.h. Homopolymerisate von konjugierten Dienen mit 4 bis 8 C-Atomen wie Butadien, Isopren, Chloropren oder deren Copolymerisate mit bis zu 60 Gew.-%, bevorzugt bis zu 30 Gew.-% eines Vinylmonomeren, z.B. Acrylnitril, Methacrylnitril, Styrol, α-Methylstyrol, Halogenstyrole, C₁-C₄-Alkylstyrol, C₁-C₈-Alkylacrylate, C₁-C₈-Alkylmethacrylate, Alkylenglykoldiacrylate, Alkylenglykoldimethacrylate, Divinylbenzol;
- Acrylatkautschuke, d.h. Homo- und Copolymerisate von C₁-C₁₀-Alkylacrylaten, z.B. Homopolymerisate von Ethylacrylat, Butylacrylat oder Copolymerisate mit bis zu 40 Gew.-%, bevorzugt nicht mehr als 10 Gew.-% Mono-Vinylmonomeren, z.B. Styrol, Acrylnitril, Vinylbutylether, Acrylsäure(ester), Methacrylsäure(ester), Vinylsulfonsäure. Bevorzugt werden solche Acrylatkautschukhomo- bzw. -copolymerisate eingesetzt, die 0,01 bis 8 Gew.-% Divinyl- oder Polyvinylverbindungen und/oder N-Methylolacrylamid bzw. N-Methylolmethacrylamid oder sonstige Verbindungen enthalten, die als Vernetzer wirken, z.B. Divinylbenzol, Triallylcyanurat.

Bevorzugt sind Polybutadienkautschuke, SBR-Kautschuke mit bis zu 30 Gew.-% einpolymerisiertem Styrol und Acrylatkautschuke, besonders solche, die eine Kern-Schalen-Struktur aufweisen, z.B. wie in DE-A 3 006 804 beschrieben.

Zur Herstellung der erfindungsgemäßen Pfropfpolymerisate kommen Latices mit mittleren Teilchendurchmessern d₅₀ von 0,05 bis 2,0 µm, vorzugsweise von 0,08 bis 1,0 µm und besonders bevorzugt von 0,1 bis 0,5 µm, in Betracht. Die Gelgehalte der eingesetzten Kautschuke können in weiten Grenzen variiert werden, vorzugsweise liegen sie zwischen 30 und 95 Gew.-% (Bestimmung nach der Drahtkäfigmethode in Toluol (vgl. Houben-Weyl, Methoden der Organischen Chemie, Makromolekulare Stoffe, Teil 1, S.307 (1961), Thieme Verlag Stuttgart)).

Ganz besonders bevorzugt sind Mischungen von Kautschuklatices mit
a) mittleren Teilchendurchmessern d₅₀ ≤320 nm, vorzugsweise 260 bis 310 nm, und Gelgehalten ≤70 Gew.-%, vorzugsweise 40 bis 65 Gew.-% und
b) mittleren Teilchendurchmessern d₅₀ ≥370 nm, vorzugsweise 380 bis 450 mm, und Gelgehalten ≥70 Gew.-%, vorzugsweise 75 bis 90 Gew.-%.

Dabei hat der Kautschuklatex (a) vorzugsweise eine Breite der Teilchengrößenverteilung von 30 bis 100 nm, besonders bevorzugt von 40 bis 80 nm, der Kautschuklatex (b) von 50 bis 500 nm, besonders bevorzugt von 100 bis 400 nm (jeweils gemessen als d₉₀-d₁₀-Wert aus der integralen Teilchengrößenverteilung).

Die Mischungen enthalten die Kautschuklatices (a) und (b) vorzugsweise im Gewichtsverhältnis 90:10 bis 10:90, besonders bevorzugt 60:40 bis 30:70 (jeweils bezogen auf den jeweiligen Feststoffanteil der Latices).

Die mittleren Teilchendurchmesser werden mittels Ultrazentrifuge (vgl. W. Scholtan, H. Lange : Kolloid-Z. u Z. Polymere 250, S. 782-796 (1972) bestimmt.

Die angegebenen Werte für den Gelgehalt beziehen sich auf die Bestimmung nach der Drahtkäfigmethode in Toluol (vgl. Houben- Weyl, Methoden der Organischen Chemie, Makromolekulare Stoffe, Teil 1, S. 307 (1961), Thieme Verlag Stuttgart).

Die verwendeten Kautschuklatices können durch Emulsionspolymerisation hergestellt werden, die erforderlichen Reaktionsbedingungen, Hilfsstoffe und Arbeitstechniken sind grundsätzlich bekannt.

Es ist auch möglich, nach bekannten Methoden zunächst ein feinteiliges Kautschukpolymerisat herzustellen und es anschließend in bekannter Weise zur Einstellung der erforderlichen Teilchengröße zu agglomerieren. Einschlägige Techniken sind beschrieben (vgl. EP-A 0 029 613; EP-A 0 007 810; DD-A 144 415; DE-A 12 33 131; DE-A 12 58 076; DE-A 21 01 650; US-A 1 379 391).

Ebenfalls kann nach der sogenannten Saatpolymerisationstechnik gearbeitet werden, bei der zunächst z.B. ein feinteiliges Butadienpolymerisat hergestellt und dann durch Weiterumsatz mit Butadien enthaltenden Monomeren zu größeren Teilchen weiterpolymerisiert wird.

Als Emulgatoren können die üblichen anionischen Emulgatoren wie Alkylsulfate, Alkylsulfonate, Aralkylsulfonate, Seifen gesättigter oder ungesättigter Fettsäuren (z.B. Ölsäure, Stearinsäure) sowie alkalischer disproportionierter oder hydrierter Abietin- oder Tallölsäure verwendet werden, vorzugsweise werden Emulgatoren mit Carboxylgruppe (z.B. Salze von C₁₀-C₁₈-Fettsäuren, disproportionierte Abietinsäure, Emulgatoren gemäß DE-A 36 39 904 und DE-A 39 13 509) eingesetzt.

Prinzipiell kann man Kautschukpolymerisatlatices auch herstellen durch Emulgieren von fertigen Kautschukpolymerisaten in wässrigen Medien (vgl. japanische Patentanmeldung JP-A 55 125 102).

Als Pfropfmonomere, die in Gegenwart der in Emulsionsform vorliegenden kautschukartigen Polymerisate polymerisiert werden, sind praktisch alle Verbindungen geeignet, die in Emulsion zu thermoplastischen Harzen polymerisiert werden können, z.B. Vinylaromaten der Formel (I) oder Verbindungen der Formel (II) bzw. deren Gemische, 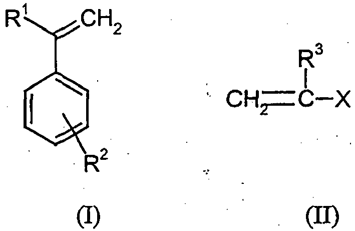 in welchen
R¹ Wasserstoff oder Methyl,
R² Wasserstoff, Halogen oder Alkyl mit 1 bis 4 Kohlenstoffatomen in ortho-, meta- oder para-Stellung,
R³ Wasserstoff oder Methyl und
X CN, R⁴OOC oder R⁵R⁶NOC darstellt,
   worin
   R⁴ Wasserstoff oder Alkyl mit 1 bis 4 Kohlenstoffatomen; und
   R⁵ und R⁶ unabhängig voneinander Wasserstoff, Phenyl oder Alkyl mit 1 bis 4 Kohlenstoffatomen bedeuten.

Beispiele für Verbindungen der Formel (I) sind Styrol, α-Methylstyrol, p-Methylstyrol und Vinyltoluol. Verbindungen der Formel (II) sind Acrylnitril und Methylmethacrylat. Weitere prinzipiell geeignete Monomere sind z.B. Vinylacetat und N-Phenylmaleinimid.

Bevorzugte Monomere sind Mischungen aus Styrol und Acrylnitril, α-Methylstyrol und Acrylnitril, aus Styrol, Acrylnitril und Methylmethacrylat sowie Kombinationen dieser Monomerengemische mit N-Phenylmaleinimid.

Bevorzugte erfindungsgemäße Pfropfpolymerisate A) sind solche, die durch Pfropfpolymerisation von Styrol und Acrylnitril im Gew.-Verhältnis 90:10 bis 50:50, vorzugsweise 80:20 bis 65:35 (wobei Styrol ganz oder teilweise ersetzt werden kann durch α-Methylstyrol oder Methylmethacrylat) in Gegenwart von solchen Mengen Kautschuk, vorzugsweise Polybutadien, erhalten werden, dass Pfropfpolymerisate mit Kautschukgehalten von 20 bis 80 Gew.-%, vorzugsweise 30 bis 75 Gew.-% und besonders bevorzugt 35 bis 70 Gew.-% resultieren.

Erfindungsgemäß geeignete Redoxinitiatorsysteme bestehen in der Regel aus einem organischen Oxidationsmittel und einem Reduktionsmittel, wobei im Reaktionsmedium zusätzlich Schwermetallionen vorhanden sein können; vorzugsweise wird ohne Schwermetallionen gearbeitet.

Erfindungsgemäß geeignete organische Oxidationsmittel sind beispielsweise und bevorzugt Di-tert.-butylperoxid, Cumolhydroperoxid, Dicyclohexylpercarbonat, tert.-Butylhydroperoxid, p-Menthanhydroperoxid oder Mischungen hieraus, besonders bevorzugt sind Cumolhydroperoxid und tert.-Butylhydroperoxid. H₂O₂ kann ebenfalls verwendet werden.

Erfindungsgemäß einsetzbare Reduktionsmittel sind vorzugsweise wasserlösliche Verbindungen mit reduzierender Wirkung, vorzugsweise ausgewählt aus der Gruppe der Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker (z.B. Glucose oder Dextrose). Prinzipiell möglich ist auch die Verwendung von z.B. Eisen(II)-salzen wie z.B. Eisen(II)-sulfat, Zinn(II)-salzen wie z.B. Zinn(II)-chlorid, Titan(III)-salze wie Titan(III)-sulfat; vorzugsweise werden jedoch keine derartigen Metallsalze verwendet.

Besonders bevorzugte Reduktionsmittel sind Dextrose, Ascorbinsäure(salze) oder Natriumformaldehydsulfoxylat (Rongalit C).

Die Menge an Redoxinitiator-Komponente verteilt sich auf Oxidations- und Reduktionsmittel wie folgt:
Die Einsatzmenge an Oxidationsmittel beträgt im allgemeinen 0,05 bis 2,0 Gew.-%, vorzugsweise 0,1 bis 1,5 Gew.-% und besonders bevorzugt 0,2 bis 1,2 Gew.-%. Die Menge an Reduktionsmittel beträgt im allgemeinen 0,05 bis 1,5 Gew.-%, vorzugsweise 0,08 bis 1,2 Gew.-% und besonders bevorzugt 0,1 bis 1,0 Gew.-%.

Üblicherweise werden die Redoxinitiatorkomponenten in Form wässriger Lösungen, wässriger Emulsionen, wässriger Suspensionen oder sonstiger wässriger Dispersionen eingesetzt.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge).

Geeignete Molekulargewichtsregler sind beispielsweise n-Dodecylmercaptan, t-Dodecylmercaptan, dimeres α-Methylstyrol, Terpinolen sowie Mischungskombinationen aus diesen Verbindungen.

Als Emulgator bei der Pfropfpolymerisationsreaktion können die obengenannten Verbindungen eingesetzt werden.

Die Aufarbeitung des Pfropfkautschuklatex A) erfolgt durch bekannte Verfahren, beispielsweise durch Sprühtrocknung oder durch Zusatz von Salzen und/oder Säuren, Waschen der Fällprodukte und Trocknung des Pulvers.

Als Vinylharze B) werden vorzugsweise Copolymerisate des Styrols und Acrylnitrils im Gewichtsverhältnis 90:10 bis 50:50 eingesetzt, wobei Styrol und/oder Acrylnitril ganz oder teilweise durch α-Methylstyrol und/oder Methylmethacrylat ersetzt sein kann; gegebenenfalls kann anteilmäßig bis zu 30 Gew.-% (bezogen auf Vinylharz) eines weiteren Monomeren aus der Reihe Maleinsäureanhydrid, Maleinsäureimid, N-(Cyclo)-Alkylmaleinimid, N-(Alkyl)-Phenylmaleinimid mitverwendet werden.

Die gewichtsmittleren Molekulargewichte (M̅_{w}) dieser Harze lassen sich in weiten Grenzen variieren, vorzugsweise liegen sie zwischen ca. 40 000 und 200 000, besonders bevorzugt zwischen 50 000 und 150 000.

Einzelheiten zur Herstellung dieser Harze sind beispielsweise in der DE-A 2 420 358 und der DE-A 2 724 360 beschrieben. Durch Masse- bzw. Lösungspolymerisation sowie durch Suspensionspolymerisation hergestellte Harze haben sich besonders bewährt.

Der Anteil des elastisch-thermoplastischen Pfropfpolymerisats (A) an den erfindungsgemäßen Formmassen lässt sich in weiten Grenzen variieren; vorzugsweise beträgt er 1 bis 80 Gew.-%, besonders bevorzugt 5 bis 50 Gew.-%.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoff (Glasfasern, Kohlefasern) und Farbmittel.

Die Endverformung kann auf handelsüblichen Verarbeitungsaggregaten vorgenommen werden und umfasst z.B. Spritzgussverarbeitung, Plattenextrusion mit gegebenenfalls anschließender Warmverformung, Kaltverformung, Extrusion von Rohren und Profilen oder Kalander-Verarbeitung.

Die erfindungsgemäßen Formmassen vom ABS-Typ können mit anderen Polymeren (Komponente C) vermischt werden. Geeignete Blendpartner sind beispielsweise ausgewählt aus mindestens einem Polymer, ausgewählt aus der Gruppe der Polycarbonate, Polyester, Polyestercarbonate und Polyamide.

Geeignete thermoplastische Polycarbonate und Polyestercarbonate sind bekannt (vgl. z.B. DE-A 1 495 626, DE-A 2 232 877, DE-A 2 703 376, DE-A 2 714 544, DE-A 3 000 610, DE-A 3 832 396, DE-A 3 077 934), z.B. herstellbar durch Umsetzung von Diphenolen der Formeln (III) und/oder (IV) 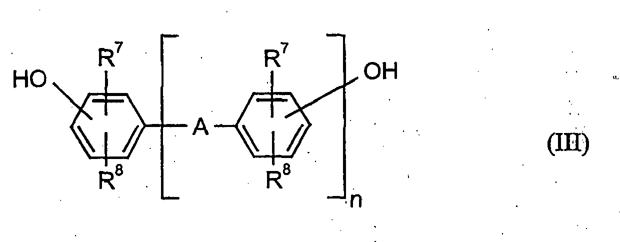 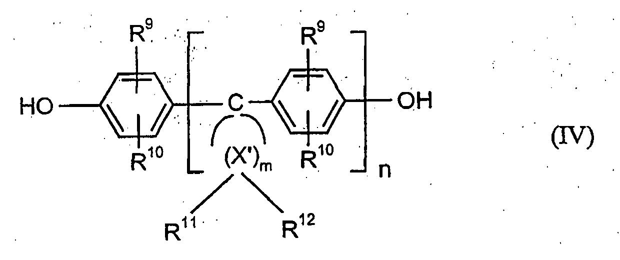 worin
A eine Einfachbindung, C₁-C₅-Alkylen, C₂-C₅-Alkyliden, C₅-C₆-Cycloalkyliden, -O-, -S-, -SO-, -SO₂- oder -CO- ist,
R⁷ und R⁸ unabhängig voneinander für Wasserstoff, Methyl oder Halogen, insbesondere für Wasserstoff, Methyl, Chlor oder Brom stehen,
R⁹ und R¹⁰ unabhängig voneinander Wasserstoff, Halogen bevorzugt Chlor oder Brom, C₁-C₈-Alkyl, bevorzugt Methyl, Ethyl, C₅-C₆-Cycloalkyl, bevorzugt Cyclohexyl, C₆-C₁₀-Aryl, bevorzugt Phenyl, oder C₇-C₁₂- Aralkyl, bevorzugt Phenyl-C₁-C₄-alkyl, insbesondere. Benzyl, bedeuten,
m eine ganze Zahl von 4 bis 7, bevorzugt 4 oder 5 ist,
n 0 oder 1 ist,
R¹¹ und R¹² für jedes X individuell wählbar sind und unabhängig voneinander Wasserstoff oder C₁-C₆-Alkyl bedeuten und
X' Kohlenstoff bedeutet,
mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (III) und (IV) sind z.B. Hydrochinon, Resorcin, 4,4'-Dihydroxydiphenyl, 2,2-Bis-(4-hydxoxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (III) sind 2,2-Bis-(4-hydroxyphenyl)-propan und 1,1-Bis-(4-hydroxyphenyl)-cyclohexan, bevorzugtes Phenol der Formel (IV) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-A 2 842 005, Monoalkylphenole, Dialkylphenole mit insgesamt 8 bis 20 C-Atomen in den Alkylsubstituenten gemäß DE-A 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte (M̅_{w}, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestem oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-A 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-A 1 900 270 und der US-A 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/öder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus
70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Falls zusätzlich mindestens ein Polymer, ausgewählt aus der Gruppe der Polycarbonate, Polyester, Polyestercarbonate und Polyamide verwendet wird, beträgt dessen Menge bis zu 500 Gew.-Teile, vorzugsweise bis zu 400 Gew.-Teile und besonders bevorzugt bis zu 300 Gew.-Teile (jeweils bezogen auf 100 Gew.-Teile A+B).

In den folgenden Beispielen sind die angegebenen Teile immer Gewichtsteile und die angegebenen % immer Gew.-%, wenn nicht anders angegeben.

### Beispiele

### Beispiel 1 (erfindungsgemäß)

58,5 Gew.-Teile (gerechnet als Feststoff) eines Polybutadienlatexgemisches (50 % mit einem mittleren Teilchendurchmesser d₅₀ von 423 nm und einem Gelgehalt von 82 Gew.-% und 50 % mit einem mittleren Teilchendurchmesser d₅₀ von 288 nm und einem Gelgehalt von 56 Gew.-%, beide hergestellt durch radikalische Polymerisation) werden mit Wasser auf einen Feststoffgehalt von ca. 20 Gew.-% gebracht. Der pH-Wert, der danach bei 12,2 liegt, wird durch Zugabe von verdünnter Schwefelsäure auf 10,0 eingestellt, wonach auf 75°C erwärmt wird. Danach werden innerhalb von 480 Minuten parallel 0,26 Gew.-Teile tert.-Butylhydroperoxid und 0,22 Gew.-Teile Natriumascorbat sowie innerhalb von 240 Minuten 41,5 Gew.-Teile eines Monomerengemisches (Styrol/Acrylnitril = 73:27) zudosiert, wobei die Temperatur innerhalb der ersten 4 h bei 75°C gehalten und danach auf 85°C angehoben wird. Parallel zu den Monomeren werden 1,72 Gew.-Teile (gerechnet als Festsubstanz) des Natriumsalzes eines Harzsäuregemisches (Dresinate 731, Abieta Chemie GmbH, Gersthofen) über 4 h zudosiert.

Nach einer einstündigen Nachreaktionszeit bei 85°C wird der Latex auf 23°C abgekühlt (End-pH-Wert 9,9); anschließend werden die Restmonomere gaschromatographisch nach der Head-Space-Technik ermittelt:

| | |
|---|---|
| Styrol: | 2050 ppm |
| Acrylnitril: | 230 ppm |

Danach wird der Pfropflatex nach Zugabe von ca. 1 Gew.-Teil eines phenolischen Antioxidans mit einem Magnesiumsulfat/Essigsäure-Gemisch koaguliert und nach dem Waschen mit Wasser das resultierende Pulver bei 70°C getrocknet.

### Beispiele 2 (Vergleich)

Beispiel 1 wird wiederholt, wobei der pH-Wert vor Beginn der Reaktion auf 11,8 eingestellt wird. Alle weiteren Maßnahmen erfolgen analog Beispiel (End-pH-Wert 9,6).

Restmonomere:

| | |
|---|---|
| Styrol: | 5310 ppm |
| Acrylnitril: | 580 ppm |

### Beispiel 3 (Vergleich)

Beispiel 1 wird wiederholt, wobei der pH-Wert vor Beginn der Reaktion auf 8,5 eingestellt wird. Der Latex koaguliert nach einer Reaktionszeit von ca. 40 min.

### Beispiel 4 (erfindungsgemäß)

Beispiel 1 wird wiederholt, wobei vor der pH-Wert-Einstellung 0,1 ppm Fe²⁺-Ionen (in Form von FeSO₄/EDTA-Komplex) zugesetzt werden und die Temperatur innerhalb der ersten 4 h bei 62°C gehalten wird.

Alle weiteren Maßnahmen erfolgen analog Beispiel 1 (End-pH-Wert 10,0).

### Restmonomere:

| | |
|---|---|
| Styrol: | 1860 ppm |
| Acrylnitril: | 130 ppm |

### Bespiel 5 (Vergleich)

Beispiel 4 wird wiederholt, wobei der pH-Wert vor Beginn der Reaktion auf 11,5 eingestellt wird (End-pH-Wert 9,6).

### Restmonomere:

| | |
|---|---|
| Styrol: | 2980 ppm |
| Acrylnitril: | 170 ppm |

### Beispiel 6 (erfindungsgemäß)

Beispiel 1 wird wiederholt, wobei vor der pH-Wert-Einstellung 0,05 Gew.-Teile Kaliumperoxodisulfat (in Form einer wässrigen Lösung) zugesetzt werden und die Temperatur innerhalb der ersten 4 h bei 70°C gehalten wird. Alle weiteren Maßnahmen erfolgen analog Beispiel 1 (End-pH-Wert 9,4).

### Restmonomere:

| | |
|---|---|
| Styrol: | 1440 ppm |
| Acrylnitril: | 130 ppm |

### Beispiel 7 (Vergleich)

Beispiel 6 wird wiederholt, wobei der pH-Wert vor Beginn der Reaktion auf 11,5 eingestellt wird (End-pH-Wert 9,8).

### Restmonomere:

| | |
|---|---|
| Styrol: | 6650 ppm |
| Acrylnitril: | 560 ppm |

### Herstellung und Prüfung der Formmassen

23,8 Gew.-Teile der in den obengenannten Beispielen erhaltenen Pfropfpolymerisate werden mit 32,7 Gew.-Teilen eines Styrol/Acrylnitril = 72:28-Copolymerharzes (M̅_{w} ≈ 85 000), 42,6 Gew.-Teile eines linearen aromatischen Polycarbonats aus 2,2-Bis-(4-hydroxyphenyl)-propan (Bisphenol A) mit einer relativen Viskosität von 1,26 (gemessen in CH₂Cl₂ bei 25°C in Form einer 0,5 gew.-%igen Lösung), entsprechend einem M̅_{w} von ca. 25 000 und 0,75 Gew.-Teile Pentaerythrittetrastearat in einem Innenkneter vermischt und anschließend bei 260°C zu Prüfkörpern verarbeitet.

Die Bestimmung der Kerbschlagzähigkeit erfolgt nach Methode ISO 180 1A an Stäben der Abmessung 80 x 10 x 4 mm bei Raumtemperatur.

Die Reißdehnung DR wird im Rahmen der Bestimmung des Zug-E-Moduls nach Methode ISO 527 an F 3 Schulterstäben bestimmt.

Die Schmelzefließfähigkeit MVR wird nach Methode DIN 53 753 bei 260°C (5 kg Belastung) ermittelt.

Wie aus Tabelle 1 ersichtlich ist, weisen die erfindungsgemäßen Formmassen verbesserte Eigenschaften, insbesondere höhere Fließfähigkeiten und höhere Reißdehnungswerte auf.

Alle Formmassen führten zu Formteilen mit hohem gleichmäßigen Oberflächenglanz.

**Tabelle 1**

| Zusammensetzungen und Eigenschaften der Polycarbonat-ABS-Formmassen | | | | |
|---|---|---|---|---|
| Beispiel | Eingesetztes Pfropfpolymerisat aus Beispiel | aₖ RT (kJ/m²) | DR (%) | MVR (cm³/10 min) |
| 8 | 1 | 60 | 37 | 7,1 |
| 9 (Vergleich) | 2 | 61 | 27 | 4,9 |
| 10 | 4 | 61 | 48 | 9,1 |
| 11 (Vergleich) | 5 | 67 | 44 | 5,8 |
| 12 | 6 | 60 | 31 | 9,6 |
| 13 (Vergleich) | 7 | 46 | 31 | 5,3 |

## Patentansprüche

1. Verfahren zur Herstellung von kautschukhaltigen Pfropfpolymerisaten durch Emulsionspolymerisation unter Verwendung eines Redoxinitiatorsystems, **dadurch gekennzeichnet, dass** man
i) vor Beginn der Pfropfpolymerisationsreaktion den Kautschuklatex auf einen pH-Wert von 9 bis 11 einstellt,
ii) die harzbildende Vinyl-Pfropfmonomeren zum Kautschuklatex (mit einer Glasübergangstemperatur ≤ 0°C) dosiert,
iii) die Redoxinitiatorkomponenten in Mengen von 0,1 bis 2,5 Gew.-% zusetzt (bezogen auf zudosierte Monomeren) und
iv) den pH-Wert während der gesamten Pfropfpolymerisationsreaktion zwischen 11,0 und 8,8 hält und der pH-Wert während der Reaktion im Rahmen einer Schwankungsbreite von ± 0,5 Einheiten konstant bleibt und einen Temperaturunterschied zwischen Beginn und Ende der Reaktion von mindestens 10°C einhält.

2. Verfahren gemäß Anspruch 1 zur Herstellung von kautschukhaltigen Pfropfpolymerisaten vom ABS-Typ.

3. Verfahren nach wenigstens einem der vorhergehenden Ansprüche, **dadurch gekennzeichnet, dass** es eingesetzt wird zur Herstellung einer Zusammensetzung enthaltend
A) mindestens ein durch radikalische Emulsionspolymerisation von harzbildenden Vinyl-monomeren in Gegenwart von in Latexform vorliegendem Kautschuk mit einer Glasübergangstemperatur ≤0°C unter Verwendung eines Redoxinitiatorsystems erhaltenes elastisch-thermoplastisches Pfropfpolymerisat und
B) mindestens ein Copolymerisat aufgebaut aus Styrol und Acrylnitril und gegebenenfalls weiteren Comonomeren
und gegebenenfalls
C) ein Harz ausgewählt aus der Gruppe der Polycarbonate, Polyestercarbonate, Polyester und Polyamide.

4. Verfahren nach wenigstens einem der vorhergehenden Ansprüche, **dadurch gekennzeichnet, dass** als Kautschuk ein Gemisch aus mindestens zwei Kautschuklatices mit
a) einem mittleren Teilchendurchmesser d₅₀ ≤ 320 nm und einem Gelgehalt ≤ 70 Gew.-% und
b) einem mittleren Teilchendurchmesser d₅₀ ≥ 370 nm und einem Gelgehalt ≥70 Gew.-% eingesetzt wird.

5. Verfahren nach Anspruch 3, **dadurch gekennzeichnet, dass** das elastisch-thermoplastische Pfropfpolymerisat A) einen Kautschukgehalt von 20 bis 80 Gew.-% hat.

6. Verfahren nach Anspruch 3, **dadurch gekennzeichnet, dass** die harzbildenden Monomere in Komponente A) Verbindungen der Formel (I) oder (II) oder Gemische hieraus sind: 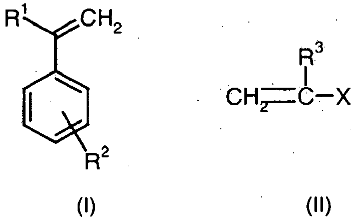 in welchen
R¹ Wasserstoff oder Methyl,
R² Wasserstoff, Halogen oder Alkyl mit 1 bis 4 Kohlenstoffatomen in ortho-, meta- oder para-Stellung,
R³ Wasserstoff oder Methyl und
X CN, R⁴OOC oder R⁵R⁶NOC darstellt,
worin
R⁴ Wasserstoff oder Alkyl mit 1 bis 4 Kohlenstoffatomen; und
R⁵ und R⁶ unabhängig voneinander Wasserstoff, Phenyl oder Alkyl mit 1 bis 4 Kohlenstoffatomen bedeuten.

7. Verfahren nach Anspruch 3, **dadurch gekennzeichnet, dass** das Redoxinitiatorsystem zur Herstellung des Pfropfpolymerisats A) ausgewählt wird aus Di-tert.-butylperoxid, Cumolhydroperoxid, Dicyclohexylpercarbonat, tert.-Butylhydroperoxid, p-Menthanhydroperoxid und H₂O₂ oder Gemische hieraus als oxidierende Komponente und mindestens einer wasserlöslichen Verbindung mit reduzierender Wirkung als reduzierende Komponente.

8. Verfahren nach Anspruch 3, wobei das Oxidationsmittel ausgewählt ist aus Cumolhydroperoxid, tert.-Butylhydroperoxid, p-Menthanhydroperoxid oder Mischungen hieraus.

9. Verfahren nach Anspruch 3, wobei das Reduktionsmittel ausgewählt ist aus Salzen von Sulfinsäure, Salzen der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker, Eisen(II)-salze, Zinn(II)-salze, Titan(III)-salze.

10. Verfahren nach Anspruch 3, wobei das Reduktionsmittel ausgewählt ist aus Dextrose, Ascorbinsäure bzw. dessen Salze, Natriumformaldehydsulfoxylat oder Mischungen hieraus.

11. Verfahren nach Anspruch 3, **dadurch gekennzeichnet, dass** das Copolymerisat B) aufgebaut ist aus Monomeren ausgewählt aus Styrol, α-Methylstyrol, Acrylnitril, Methylmethacrylat, Maleinsäureanhydrid, N-Phenylmaleinimid oder Mischungen daraus.

12. Verfahren nach Anspruch 3, enthaltend zusätzlich mindestens ein Harz, ausgewählt aus der Gruppe der Polycarbonate, Polyestercarbonate, Polyester und Polyamide.

13. Verwendung der nach wenigstens einem der vorhergehenden Ansprüche hergestellten Pfropfpolymerisate zur Herstellung von Formteilen.

## Claims

1. Method for the production of rubber-containing graft polymerisates by emulsion polymerization using a redox initiator system which is **characterized in that**
i) previous to the start of graft polymerization the rubber latex is adjusted to a pH value from 9 to 11,
ii) the resin-forming vinyl graft monomers are dosed to the rubber latex with a glass transition temperature of ≤ 0 °C
iii) the redox initiator components are added in amounts of 0.1 to 2.5 % by weight based on the dosed monomers and
iv) the pH value is kept between 11.0 and 8.8 during the entire graft polymerization reaction, and the pH value remains constant during the reaction within a fluctuation range of ± 0.5 units and a difference in temperature of at least 10 °C between reaction start and end of reaction is kept.

2. Method according to claim 1 for the production of rubber-containing graft polymerisates of ABS type.

3. Method according to at least one of previous claims, **characterized in that** it is applied to the production of a composition containing
A) at least one elastic-thermoplastic graft polymerisate obtained by radical emulsion polymerization of resin-forming vinyl monomers in presence of rubber present in latex form of a glass transition temperature of ≤0 °C applying a redox initiator system and
B) at least one co-polymerisate made from styrene and acrylonitrile and if appropriate further co-monomers
and optionally
C) a resin selected from the group of polycarbonates, polyester carbonates, polyesters and polyamides.

4. Method according to at least one of previous claims, **characterized in that** as rubber a mixture of at least two rubber latices with
a) a mean particle diameter d₅₀ ≤ 320 nm and a gel content ≤ 70 weight-% and
b) a mean particle diameter d₅₀ ≥ 370 nm and a gel content ≥ 70 weight-% is applied.

5. Method according to claim 3, **characterized in that** the elastic-thermoplastic graft polymerisate A) has a rubber content of 20 to 80 weight-%.

6. Method according to claim 3, **characterized in that** the resin-forming monomers in component A) are compounds of formula (I) or (II) or mixtures thereof: 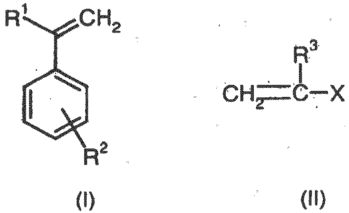 in which
R¹ represents hydrogen or methyl,
R² represents hydrogen, halogen or alkyl with 1 to 4 carbon atoms in ortho-, meta- or para-position,
R³ represents hydrogen or methyl and
X represents CN, R⁴OOC or R⁵R⁶NOC,
wherein
R⁴ means hydrogen or alkyl with 1 to 4 carbon atoms; and
R⁵ and R⁶ independently from each other mean hydrogen, phenyl or alkyl with 1 to 4 carbon atoms.

7. Method according to claim 3, **characterized in that** the redox initiator system for production of graft polymerisate A) is selected from di-tert.-butyl peroxide, cumol hydroperoxide, dicyclohexyl percarbonate, tert-butyl hydroperoxide, p-menthane hydroperoxide and H₂O₂ or mixtures thereof as oxidizing component and at least one water-soluble compound with reducing effect as reducing component.

8. Method according to claim 3, wherein the oxidant is selected from cumol hydroperoxide, tert-butyl hydroperoxide, p-menthane hydroperoxide or mixtures thereof.

9. Method according to claim 3, wherein the reductant is selected from salts of sulfinic acid, salts of sulfurous acid, sodium dithionite, sodium sulfite, sodium hyposulfite, sodium hydrogensulfite, ascorbic acid and salts thereof, rongalite C (sodium formaldehydesulfoxylate), mono- and dihydroxy acetone, sugar, iron(II) salts, tin(II) salts, titanium(III) salts.

10. Method according to claim 3, wherein the reductant is selected from dextrose, ascorbic acid or its salts, respectively, sodium formaldehydesulfoxylate or mixtures thereof.

11. Method according to claim 3, **characterized in that** co-polymerisate B) is made from monomers selected from styrene, α-methyl styrene, acrylonitrile, methyl methacrylate, maleic anhydride, N-phenyl maleimide or mixtures thereof.

12. Method according to claim 3, containing additionally at least one resin, selected from the group of polycarbonates, polyester carbonates, polyesters and polyamides.

13. Use of the graft polymerisates produced following at least one of previous claims for the production of molded parts.

## Revendications

1. Procédé de production des polymères greffés contenant du caoutchouc par une polymérisation en émulsion en utilisant un système initiateur rédox **caractérisé en ce que**
i) avant le début de la réaction de polymérisation par greffage le pH est ajusté à une valeur de 9 à 11,
ii) les monomères de greffage en vinyle formant une résine sont ajoutés de manière dosée au latex de caoutchouc (avec une température de transition vitreuse de ≤ 0 °C)
iii) les composants de l'initiateur rédox sont utilisés dans des proportions comprises entre 0,1 et 2,5 % en poids (par rapport aux monomères ajoutés de manière dosée) et
iv) le pH est maintenu entre 11,0 et 8,8 pendant toute la réaction de polymérisation par greffage et le pH reste constant pendant la réaction dans une plage de fluctuation ± 0,5 unités, et une différence de température entre le début et la fin de la réaction d'au moins 10 °C est maintenue.

2. Procédé selon la revendication 1 pour la production des polymères greffés contenant du caoutchouc du type ABS.

3. Procédé selon au moins l'une des revendications précédentes **caractérisé en ce qu'**il est employé pour la production d'une composition contenant
A) au moins un polymère greffé élastique thermoplastique obtenu par une polymérisation radicalaire en émulsion des monomère en vinyle formant une résine en présence des caoutchoucs présents sous forme d'un latex ayant une température de transition vitreuse de ≤ 0 °C en utilisant un système initiateur rédox et
B) au moins un copolymère fabriqué en styrène et acrylonitrile et optionnellement des autres comonomères
et optionnellement
C) une résine sélectionnée parmi le groupe des polycarbonates, polyestercarbonates, polyesters et polyamides.

4. Procédé selon au moins l'une des revendications précédentes **caractérisé en ce qu'**un mélange d'au moins deux latex de caoutchouc ayant
a) un diamètre moyen des particules d₅₀ ≤ 320 nm et une teneur en gel ≤ 70 % en poids et
b) un diamètre moyen des particules d₅₀ ≥ 370 nm et une teneur en gel ≥ 70 % en poids
est utilisé en tant que le caoutchouc.

5. Procédé selon la revendication 3 **caractérisé en ce que** le polymère greffé élastique thermoplastique A) a une teneur en caoutchouc de 20 à 80 % en poids.

6. Procédé selon la revendication 3, **caractérisé en ce que** les monomères formant une résine dans le composant A) sont des composés des formules (I) ou (II) ou ses mélanges : 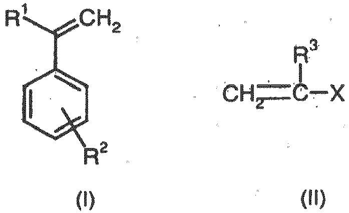 dans lesquelles
R¹ représente de l'hydrogène ou de méthyle,
R² représente de l'hydrogène, de l'halogène ou un alkyle ayant 1 à 4 atomes de carbone à la position ortho, méta ou para,
R³ représente de l'hydrogène ou de méthyle et
X représente CN, R⁴OOC ou R⁵R⁶NOC,
dans laquelle
R⁴ représente de l'hydrogène ou un alkyle ayant 1 à 4 atomes de carbone; et
R⁵ et R⁶ représentent indépendamment de l'hydrogène, phényle ou alkyle ayant 1 à 4 atomes de carbone.

7. Procédé selon la revendication 3, **caractérisé en ce que** le système d'initiateur rédox pour la production des polymères greffés A) est sélectionné parmi du di-tert.-butyl peroxyde, cumol hydroperoxyde, dicyclohexyl percarbonate, tert-butyl hydroperoxyde, p-menthane hydroperoxyde et H₂O₂ ou ses mélanges en tant que le composant oxydant et au moins un composé soluble dans de l'eau ayant un effet de réduction en tant que le composant de réduction.

8. Procédé selon la revendication 3, **caractérisé en ce que** l'agent d'oxydation est sélectionné parmi du cumol hydroperoxyde, tert.-butyl hydroperoxyde, p-menthan hydroperoxyde ou ses mélanges.

9. Procédé selon la revendication 3, dans lequel l'agent de réduction est sélectionné parmi des sels de l'acide sulfinique, des sels de l'acide sulfureux, dithionite de sodium, sulfite de sodium, hyposulfite de sodium, hydrogénosulfite de sodium, acide ascorbique et ses sels, rongalite C (formaldéhyde sulfoxylate de sodium), mono- et dihydroxyacéton, sucre, des sels en fer (II), des sels en étain (II), des sels en titane (III).

10. Procédé selon la revendication 3, dans lequel l'agent de réduction est sélectionné parmi le dextrose, de l'acide ascorbique ou ses sels, formaldéhyde sufloxylate de sodium ou ses mélanges.

11. Procédé selon la revendication 3, **caractérisé en ce que** le copolymère B) est formé par des monomères sélectionnés parmi le styrène, α-méthylstyrène, acrylonitrile, méthylméthacrylate, anhydride de l'acide maléique, N-phenyl maléinimide ou ses mélanges.

12. Procédé selon la revendication 3, comprenant en autre au moins une résine sélectionnée parmi le groupe des polycarbonates, polyestercarbonates, polyesters et polyamides.

13. Utilisation des polymères greffés selon au moins l'une des revendications précédentes pour la production des articles moulés.
